# EUROPÄISCHE PATENTSCHRIFT

(11) **EP 4 169 358 B1**
(45) Veröffentlichungstag und Bekanntmachung des Hinweises auf die Patenterteilung: **21.05.2025**
(21) Anmeldenummer: 21735894.4
(22) Anmeldetag: 18.06.2021
(51) Int. Cl.: H05H 3/06, G01V 5/10, G21B 3/00

(54) **NEUTRONENGENERATOR**
NEUTRON GENERATOR
GÉNÉRATEUR DE NEUTRONS

(30) Priorität: 23.06.2020 DE 102020116549
(43) Veröffentlichungstag der Anmeldung: 26.04.2023
(73) Patentinhaber: Kollewe, Dieter, 35066 Frankenberg/Eder (DE)
(72) Erfinder: Kollewe, Dieter, 35066 Frankenberg/Eder (DE)
(74) Vertreter: Patentanwälte Olbricht Buchhold Keulertz
(86) Internationale Anmeldenummer: PCT/EP2021/066638
(87) Internationale Veröffentlichungsnummer: WO 2021/259799

(56) Entgegenhaltungen:
- DE-B- 1 077 800
- DE-B- 1 207 516
- US-A- 3 448 314
- US-A1- 2013 170 592
- US-A1- 2016 180 970
- US-A1- 2017 309 351
- SLACK C. M. ET AL: "A 200 kv Neutron Source", REVIEW OF SCIENTIFIC INSTRUMENTS, vol. 8, no. 6, 1 June 1937 (1937-06-01), US, pages 193 - 196, XP055844565, ISSN: 0034-6748, Retrieved from the Internet <URL:https://aip.scitation.org/doi/pdf/10.1063/1.1752285> DOI: 10.1063/1.1752285

## Beschreibung

Die Erfindung betrifft einen Neutronengenerator gemäß dem Oberbegriff von Anspruch 1 sowie ein Energieerzeugungssystem nach Anspruch 12, das mindestens einen derartigen Neutronengenerator aufweist.

Neutronengeneratoren werden für unterschiedlichste Aufgaben eingesetzt. Dazu zählen etwa die Untersuchung von Bodenschichten in der Erdöl-/Erdgasindustrie, die Ermittlung der Wasserströmungsgeschwindigkeit in Bohrlöchern, die Prüfung von Gepäckstücken auf Sprengstoff in der Sicherheitstechnik, die Bestrahlung von Tumoren in der Medizintechnik und viele andere mehr. Oftmals werden zur Erzeugung von Neutronen Fusionsreaktionen ausgenutzt. Hierbei ist die Deuteron-Tritium-Reaktion sehr wichtig, es werden aber auch Deuteron-Deuteron- oder Tritium-Tritium-Reaktionen eingesetzt. Bei vielen Neutronengeneratoren wird dabei ein festes mit Tritium imprägniertes Titanhydrid-Target auf einer dünnen Silberfolie mit Deuteronen bestrahlt.

Die Versorgungsspannung von bekannten Neutronengeneratoren ist sehr hoch. Daher ist der Aufwand für die erforderlichen elektrischen Hochspannungsgeräte sowie die elektrische Isolierung der eingesetzten Bauteile sehr hoch. Bei zirkular beschleunigten Ionen sind überdies schwere Magnete und RF-Oszillatoren notwendig. Der Einsatz beispielsweise von mit Tritium imprägnierten 1 µm dicken Titanhydridschichten auf 0,2 mm dicken Silberfolien hat weiterhin den Nachteil, dass ein beträchtlicher Teil der einfallenden Projektilenergie durch Bremsung im schweren Titan und die kinetische Energie der Stoßpartner nach dem Stoß verloren geht und nicht für eine Fusionsreaktion zur Verfügung steht.

C. M. Stack und L. F. Ehrke beschreiben in REVIEW OF SCIENTIFIC INSTRUMENTS, Bd. 8, Nr. 6 vom 01.06.1937, Seite 193 bis 196, eine Röhre zur Nutzung der D-D-Reaktion für die Erzeugung von Neutronen. Es werden eine Kapillarbogen-lonenquelle und ein Target aus schwerem Eis verwendet.

US 3 448 314 A offenbart einen Neutronengenerator mit einer abgedichteten Umhüllung, Mitteln zur Erzeugung eines Plasmas innerhalb eines Teils der Umhüllung und einer Begrenzungselektrode, die diesen Teil von einem weiteren Teil abgrenzt und eine Öffnung für die Extraktion von Ionen aus dem Plasma aufweist. Eine Extraktionselektrode und eine Zielabschirmung weisen Öffnungen auf, die mit der Öffnung der Grenzelektrode übereinstimmen, um den Durchgang eines Ionenstrahls zu ermöglichen und die nacheinander von der Grenzelektrode innerhalb des weiteren Teils beabstandet sind. Ferner sind Mittel vorgesehen zur Erzeugung eines axialen Magnetfelds im Bereich der Öffnung der Grenzelektrode sowie ein hinter der Zielabschirmung angeordnetes Ziel.

Eine aus US 2013 170 592 A1 bekannte Vorrichtung zur Erzeugung von Ionen umfasst ein Substrat, das in einem Gehäuse angeordnet ist. Das Gehäuse ist so konfiguriert, dass es ein Gas enthält. Das Substrat weist eine Innenfläche auf, die zumindest teilweise ein Innenvolumen definiert. Das Substrat umfasst auch eine Reihe von Rillen mit Wänden. An den Wänden der Kanäle sind Nanospitzen angeordnet.

US 2017 309 351 A1 offenbart Systeme und Verfahren in Bezug auf Fusionsreaktoren zur Verschmelzung von Teilchen durch mehrfache periodische Kollisionen.

US 2016 180 970 A1 beschreibt einen Fusionsreaktor mit zwei gegenüberliegenden Kathoden, die durch einen Spalt voneinander getrennt sind. Eine Anode ist außerhalb des Spaltes in einer horizontalen Ebene von den vertikal angeordneten Kathoden positioniert. Diese Kathoden-/Anodenstruktur befindet sich in einer Kammer, in der ein Vakuum herrscht. In die Kammer kann eine bestimmte Menge an Brennstoff wie Wasserstoff, Deuterium und/oder Tritium eingeleitet werden. Bei Anlegen eines Stroms an das System werden die Ionen in einer Umlaufbahn um die Kathoden gehalten, wodurch ein Plasma entsteht.

In DE 1 077 800 B werden ein Verfahren und eine Vorrichtung zur Durchführung von Kernreaktionen beschrieben, wobei in einer evakuierten Apparatur Ionen in einem ersten elektrischen Feld auf hohe Geschwindigkeit gebracht werden, dann aus diesem Feld herausgezogen werden und in ein zweites, entgegengesetzt gerichtetes Feld gelangen. In diesem zweiten Feld werden die Ionen abgebremst und unter Umkehr ihrer Bewegungsrichtung wieder zum ersten Feld hin beschleunigt, in das sie eintreten. Dort werden sie abgebremst und unter Umkehr ihrer Bewegungsrichtung wiederum, wie anfänglich, zum zweiten Feld hin beschleunigt. Durch fortlaufende Wiederholung dieser Vorgänge wird ein Pendeln der Ionen zwischen den beiden elektrischen Feldern bewirkt.

DE 1 207 516 B offenbart eine Vorrichtung zur Erzeugung von Neutronen mit Hifle von Kernreaktionen, die elektrisch beschleunigte, zusammenstoßende Ionen auslösen. Die Vorrichtung hat ein Gefäß, dessen Mittelteil von einem axial gerichteten Magnetfeld durchsetzt ist und an dessen beiden entgegengesetzten Enden elektrische Felder mit einem axial nach außen gerichteten positiven Gradienten der Feldstärke angeordnet sind, welche den zu Bündeln zusammengefaßten Ionen eine periodische Pendelbewegung von einem Ende zum anderen aufzwingen.

Ziel der Erfindung ist es, diese und weitere Nachteile des Standes der Technik zu überwinden und einen Neutronengenerator zu schaffen, der einfach und kompakt aufgebaut ist, eine im Vergleich zu bekannten lonengeneratoren geringere Hochspannungsversorgung benötigt und dennoch eine hohe Effektivität aufweist.

Hauptmerkmale der Erfindung sind im kennzeichnenden Teil von Anspruch 1 angegeben. Ausgestaltungen sind Gegenstand der Ansprüche 2 bis 11.

Es wird ein Neutronengenerator vorgeschlagen, aufweisend einen Vakuumbehälter mit einem ersten Ende und einem zweiten Ende, mindestens eine Ionenquelle an dem ersten Ende und/oder dem zweiten Ende mit einem Gaseinlass, einem Ionenauslass, einer Anode und einer Extraktionskathode, und eine zentrale Hochspannungselektrode, wobei der Ionenauslass als Kapillare ausgeführt ist, wobei die Extraktionskathode zum Extrahieren von Ionen aus dem Ionenauslass stromabwärts des Ionenauslasses angeordnet ist, wobei die zentrale Hochspannungselektrode zwischen dem ersten Ende und dem zweiten Ende des Vakuumbehälters angeordnet ist und mindestens eine Bohrung aufweist, und wobei die zentrale Hochspannungselektrode derart zwischen dem ersten Ende und dem zweiten Ende angeordnet ist, dass aus einer betreffenden Ionenquelle an dem ersten oder zweiten Ende abgegebene Ionen durch die mindestens eine Bohrung der zentralen Hochspannungselektrode hindurchfliegen und vor Erreichen des gegenüberliegenden Endes durch Wirkung der zentralen Hochspannungselektrode ihre Flugrichtung umkehren und mit Ionen aus der betreffenden Ionenquelle kollidieren.

Durch einen derartigen Aufbau wird mindestens ein Kapillaritron als Ionenquelle in einem Vakuumbehälter angeordnet, das einen Ionenstrahl abgeben kann. Hierzu weist die Ionenquelle ein Elektrodenpaar mit zwei in Strahlrichtung voneinander beabstandeten Elektroden auf. Eine dieser Elektroden, d.h. die jeweilige Anode, ist etwas mehr in Richtung des Gaseinlasses angeordnet oder durch die Kapillare selbst gebildet, während die andere Elektrode, d.h. die Extraktionskathode, des Elektrodenpaars in Strahlrichtung, d.h. stromabwärts angeordnet, von dem jeweiligen lonenauslass beabstandet ist. Die Elektroden können mit einer Gleichspannung im Bereich von ca. 50 -100 kV oder einer Wechselspannung im Radiowellenbereich ca. 8 MHz) versorgt werden. Durch den jeweiligen Gaseinlass einströmendes Gas führt dann zu einer Erzeugung eines Ionenstrahls.

Hierzu wird Gas durch den betreffenden Gaseinlass eingelassen. Durch die positive Hochspannung wird jeweils eine Plasmaentladung mit Feldionisierung in der jeweiligen Kapillare oder stromaufwärts gezündet. Durch die Extraktionskathode wird ein Ionenstrahl aus der Kapillare hervorgerufen, der einen großen Anteil positiver atomarer Ionen enthält. Durch die anziehende Wirkung der bevorzugt auf Erdpotential liegenden Extraktionskathode werden die positiven Ionen beschleunigt. Es ist besonders vorteilhaft, wenn die Extraktionskathode in dem Strahlengang eine Bohrung aufweist, durch die die Ionen durchtreten können. Diese weisen jeweils eine Energie auf, die sich aus der Multiplikation der Elementarladung e mit der an der jeweiligen Anode liegenden Spannung berechnen lässt. Nach dem Durchtreten durch die Extraktionskathode werden die Ionen zu Ionenstrahlen geformt.

Derartige Kapillaritrons haben den Vorteil der relativ einfachen Herstellung, des kompakten und preiswerten Aufbaus sowie einem dennoch sehr eng begrenzten Ionenstrahl mit hohen Stromdichten von ca. 100 A/cm² bis etwa 1000 A/cm² und einem im Verhältnis zur Größe hohen Ionenstrom von ca. 1 mA bis etwa 1,7 mA. Die Kapillare einer solchen Ionenquelle kann etwa mit einem Durchmesser von ca. 25 µm gefertigt werden. Durch Anlegen von Spannungen von einigen kV werden aus einem oder zwei verschiedenen zugeführten Gasen die Ionenstrahlen erzeugt. Die Winkelöffnung der Ionenstrahlen kann etwa 6 mA/sr betragen.

Die zentrale Hochspannungselektrode erlaubt eine Beschleunigung der Ionenstrahlen zu der zentralen Hochspannungselektrode hin. Es ist vorstellbar, eine Spannung von ca. 30 bis 100 kV an die Hochspannungselektrode anzulegen. Erste Ionen, die nach Inbetriebnahme in den Vakuumbehälter emittiert werden, fliegen zunächst als ein erster Ionenstrahl von der betreffenden Ionenquelle durch die Bohrung der Hochspannungselektrode hindurch. Dann werden sie durch die nunmehr bremsende Spannung wieder verlangsamt, so dass sie schließlich umkehren und erneut in Richtung der zentralen Hochspannungselektrode beschleunigt werden. Der Vakuumbehälter ist hierzu so ausgebildet, dass seine Erstreckung in Strahlrichtung ausreichend groß ist und die vollständige Bewegungsumkehr erfolgen kann.

Nun liegt folglich ein zweiter Ionenstrahl in gegenläufiger Richtung vor, der sich zu der den ersten Ionenstrahl hervorrufenden Ionenquelle hin erstreckt. Auf der gegenläufigen Bewegung des zweiten Ionenstrahls wird zunächst die Hochspannungselektrode erreicht. Dort kann eine Kollision von sich gegenläufig bewegenden Ionen erfolgen und insbesondere im Bereich der Hochspannungselektrode kann mit Kollisionen gerechnet werden. Da allerdings voraussichtlich nur relativ wenige Ionen aufeinander prallen, ist anzunehmen, dass die meisten Ionen nach Durchtritt durch die zentrale Hochspannungselektrode weiterfliegen und ebenso ihre Bewegungsrichtung umkehren. Bei vorhandenem Restgas in dem Vakuumbehälter können sie nach Passieren der Hochspannungselektrode weiter gebremst werden, so dass ihr Bremsweg etwas kürzer ist als der ursprünglich der Beschleunigung unterworfene Weg. Bei den relativ niedrigen Ionenenergien in dem erfindungsgemäßen Neutronengenerator erfolgt die Abbremsung im Restgas vorzugsweise durch elektronischen Bremsverlust, so dass die Ionen bei Stößen mit den Elektronen der Restgasmoleküle nur wenig aus ihrer Bahn abgelenkt werden und die Generalrichtungen der Ionenstrahlen erhalten bleiben. Der nukleare Bremsverlust der Ionen ist sehr gering, so dass Stöße mit großen Streuwinkeln an Kernen der Restgasmoleküle nur wenig vorkommen. Es ist besonders bevorzugt, die Ionenstrahlen möglichst eng zu begrenzen, so dass die Kollisionswahrscheinlichkeit zwischen den Ionen hoch bleibt. Diese Wahrscheinlichkeit lässt sich durch die Luminosität ermitteln, wie weiter nachfolgend ausgeführt.

Damit Ionenstrahlen wie vorangehend erwähnt nahezu stationär auf nahezu linearen Pendel-Bahnen bewegen kann, darf der Druck in dem Vakuumbehälter nicht zu hoch sein, damit der Energieverlust des Ions bei Hin- und Herpendeln im Gas nicht zu hoch ist, er darf jedoch auch nicht so niedrig sein, dass zu wenig neutronenproduzierende Reaktionen auftreten. Außerdem sollte verhindert werden, dass sich elektrische Entladungen und Überschläge im Gas ereignen. Der Gasdruck innerhalb des Vakuumbehälters sollte demnach bevorzugt zwischen ungefähr 0,01 und 100 Pa (zwischen 0,0001 und 1 mbar) betragen.

Es bietet sich zudem an, die zentrale Hochspannungselektrode mittig zwischen den beiden Enden des Vakuumbehälters zu platzieren, um die Ionenstrahlen direkt innerhalb der zentralen Hochspannungselektrode kollidieren zu lassen. Bei ausreichender Energie, z.B. ca. 100 bis 200 keV im Schwerpunktsystem, können die Ionen beim Zusammenstoß Kernreaktionen mit Neutronenproduktion auslösen.

Durch die Spannung an der zentralen Hochspannungselektrode sollte weiterhin der Energieverlust der Ionen während ihres linearen Pendelflugs ausgeglichen werden, so dass ein längerer Aufenthalt auf einer stabilen und stationären Bewegungsbahn ermöglicht wird. Da für den Energiebereich der Ionen um 50 bis 100 keV der Energieverlust nur durch den elektronischen Anteil und nicht durch den nuklearen Anteil bestimmt ist, werden die Ionen hauptsächlich durch die Elektronen des Target-Gases gebremst und erleiden nur wenige Stöße mit den Kernen der Gasatome. Dadurch ist die Ionenbewegung im Wesentlichen geradlinig und folgt den elektrischen Feldlinien, so dass die Ionen lange Zeit im elektrischen Feld hin und her pendeln können, bis sie eine Fusionsreaktion mit einem Neutron als Reaktionsprodukt hervorrufen. Dadurch wird nur ein niedriger Strom aus der Ionenquelle benötigt.

Bei dem erfindungsgemäßen Neutronengenerator benötigen die Ionen eine wesentlich geringere Energie zur Freisetzung von Neutronen als bei einem festen Target, wenn sie sich im Schwerpunktsystem entgegengesetzt aufeinander zubewegen. Die Energie ist bei gleichen Ionen, z.B. Deuteronen, jeweils nur ca. 50% der Energie die bei einem feststehenden Target benötigt wird, wenn einer der Stoßpartner ruht. Bei einem direkten Stoß zweier Gasionen gegeneinander geht der größte Teil der Schwerpunktsenergie in die Reaktion und die kinetische Energie der Reaktionsprodukte, so dass nur wenig Energie verloren geht und der Prozess vergleichsweise effizient ist. Weiterhin haben die Ionen bereits bei ihrem Austritt aus der betreffenden Kapillare und der nachfolgenden Beschleunigung zu der Extraktionskathode jeweils eine relativ hohe Energie im Bereich von 10 bis 15 keV, welche dann durch die weitere Beschleunigung zu der zentralen Hochspannungselektrode um ca. 35 bis 40 kV erhöht werden kann. Die gesamte im Schwerpunktsystem zur Verfügung stehende Energie könnte dann in einem Bereich von etwa 100 keV liegen.

Der Neutronengenerator kann dann mit deutlich geringeren Hochspannungen als üblich versorgt werden. Der Aufwand zur elektrischen Isolierung der Komponenten sowie zur Erreichung einer erforderlichen Durchschlagfestigkeit verringert sich demnach signifikant und erlaubt den Einsatz preiswerter Bauteile mit kleinen Dimensionen. Es könnten weiterhin auch gasgefüllte Reaktionskammern mit kleinen Abmessungen ohne kostenintensive Vakuumpumpen verwendet werden. Zudem ist bei Bestrahlung des Gases selbst, etwa Tritium oder Deuterium, die Neutronenausbeute pro mC des einfallenden Ionenstroms wesentlich höher. Erfindungsgemäß wird statt eines praktisch nur störenden Festkörpers nur das reagierende Gas mit Ionen gezielt beschossen.

Durch den kompakten Aufbau der Ionenquellen sowie die gegenläufigen Strahlrichtungen ist es möglich, den gesamten Aufbau des Neutronengenerators und damit auch des Vakuumbehälters sehr kompakt zu gestalten. Zum Erreichen eines notwendigen Vakuums innerhalb des Vakuumbehälters reichen kleinere Vakuumpumpen aus. Der Neutronengenerator ist dadurch besonders gut auch für mobile Anwendungen, z.B. in Bohrlöchern, oder auch im medizinischen Bereich geeignet. Durch den einfachen Aufbau ist die Herstellung des erfindungsgemäßen Neutronengenerators wesentlich kostengünstiger als die bisher bekannten.

Zum weiter verbesserten Führen von Ionenstrahlen weist der erfindungsgemäße Neutronengenerator ferner mindestens eine Führungskapillare aus einem isolierenden Material auf, die sich von mindestens einem Ionenauslass zu der Hochspannungselektrode erstreckt. Die Erstreckung kann zwischen dem betreffenden Ionenauslass und der betreffenden Bohrung der Hochspannungselektrode erfolgen.

Aufgrund der elektrisch isolierenden Ausführung der Führungskapillare wird die Geschwindigkeit der Ionen vermindert, dennoch kann ihre Führung verbessert werden, um die Kollisionswahrscheinlichkeit zu erhöhen. Werden an beiden Enden des Vakuumgehäuses Ionenquellen eingesetzt können sich Führungskapillaren zu beiden Enden hin erstrecken.

Bevorzugt sind mindestens eine erste Ionenquelle an dem ersten Ende und mindestens eine zweite Ionenquelle an dem zweiten Ende angeordnet, wobei die erste Ionenquelle und die zweite Ionenquelle derart in dem Vakuumbehälter angeordnet sind, dass ein erster Ionenauslass und ein zweiter lonenauslass zueinander gerichtet sind, wobei die Bohrung der zentralen Hochspannungselektrode in einer Verbindungslinie zwischen dem ersten lonenauslass und dem zweiten Ionenauslass liegt.

Es werden folglich durch zwei unabhängige Ionenquellen gleichzeitig zwei Ionenstrahlen erzeugt, die bereits bei ihrer Generierung einander gegenläufige Richtungen aufweisen. Die Ionenstrahlen aus beiden Ionenquellen werden dem vorangehend dargestellten Prozess der Beschleunigung und anschließenden Bewegungsumkehr unterworfen, so dass eine wechselseitige, mehrfache Richtungsänderung beider Ionenstrahlen stattfindet, während weiter Ionen durch beide Ionenquellen abgegeben werden. Hierdurch können die positiven Ionen wiederholt mit entgegenkommenden anderen positiven Ionen zusammenprallen. Der Neutronengenerator ist dadurch trotz seiner kompakten Ausmaße sehr effektiv und dennoch einfach aufgebaut. Es versteht sich, dass jede Ionenquelle ein Elektrodenpaar mit zwei in Strahlrichtung voneinander beabstandeten Elektroden aufweist. Die Anoden beider Ionenquellen könnten gleichzeitig oder sequentiell mit der für die Ionenabgabe erforderlichen Spannung versorgt werden.

Eine vorteilhafte Ausführungsform weist ferner für jede Ionenquelle mindestens ein elektrisch oder magnetisch betreibbares Multipolelement stromabwärts der betreffenden Ionenquelle und stromaufwärts der zentralen Hochspannungselektrode zum Fokussieren eines betreffenden Ionenstrahls auf. Ein solches Multipolelement kann insbesondere symmetrisch zu der Strahlrichtung angeordnet sein und sowohl innerhalb als auch außerhalb des Vakuumbehälters platziert sein. Ein Multipolelement kann beispielsweise dazu ausgebildet sein, ein Quadrupolfeld zu erzeugen. Es ist allerdings auch denkbar, andere Ausführungen zu verwenden, die beispielsweise ein Oktupolfeld erzeugen. Neben dem aktiven Betreiben der Multipolelemente können auch Permanentmagnete eingesetzt werden. Es könnten auch andere Einrichtungen eingesetzt werden, die etwa unter den Begriff der elektrostatischen Linse einzuordnen sind. Das mindestens eine Multipolelement gleicht Schwankungen der Bahn der Ionen aus. Die Multipolelemente können alternierende Gradienten aufweisen.

Des Weiteren kann der erfindungsgemäße Neutronengenerator mindestens eine Ablenkungseinrichtung zum Beeinflussen der Richtung eines betreffenden Ionenstrahls aufweisen. Diese kann Solenoidelemente und Ablenkmagnete (sogenannte "Steerer") aufweisen. Die Ablenkungseinrichtung kann innerhalb oder außerhalb des Vakuumbehälters insbesondere symmetrisch um eine Verbindungslinie zwischen den beiden Enden angeordnet sein. Die Ablenkungseinrichtung kann elektromagnetisch oder permanentmagnetisch wirken.

Durch die vorangehend genannten Merkmale werden Vorkehrungen getroffen, um die sich insgesamt unvermeidlich auffächernden Ionenstrahlen zu bündeln und die Auffächerung zu minimieren. Dabei ist es wichtig, dass die Ionenstrahlen auf ihrem gesamten Weg eng begrenzt bleiben so dass die Kollisionswahrscheinlichkeit hoch bleibt. Sie werden durch elektrostatische Linsen und magnetische bzw. elektrische Quadrupole fokussiert, damit die beiden Ionenstrahlen ebenfalls sehr kleine Durchmesser haben und mit hoher Wahrscheinlichkeit miteinander in Wechselwirkung treten.

Zur zusätzlichen Ausrichtung der Ionenstrahlen ist günstig, die Deckel oder andere, die Ionenquellen tragende Einrichtungen verstellbar auszuführen, um die Einbaulage der Ionenquellen zu justieren. Es könnte allerdings auch denkbar sein, sämtliche Ionenquellen auf einer Grundplatte oder einem Träger angeordnet durch ein generatives Herstellverfahren zu fertigen, um eine besonders hohe Präzision ihrer Anordnung zueinander zu gewährleisten.

Die zentrale Hochspannungselektrode könnte bevorzugt einen zu einer Verbindungslinie zwischen dem ersten Ende und dem zweiten Ende senkrecht verlaufenden Querschnitt aufweisen, dessen Größe die eines in derselben Richtung gebildeten Querschnitts des Vakuumbehälters unterschreitet. Die Hochspannungselektrode könnte dann mithilfe mindestens eines Stabs oder eines anderen geeigneten Elements in dem Vakuumbehälter aufgehängt werden, um zu der betreffenden Verbindungslinie ausgerichtet zu sein. Der Stab kann die elektrische Verbindung herstellen.

In einer weiteren Ausführungsform sind mehrere erste Ionenquellen an dem ersten Ende und mehrere zweite Ionenquellen an dem zweiten Ende angeordnet und liegen sich paarweise gegenüber, so dass dadurch mehrere parallel zueinander angeordnete Ionenstrahlen gebildet werden können, wobei die Hochspannungselektrode jeweils eine Bohrung für ein Paar erster Ionenquellen und zweiter Ionenquellen aufweist, die mit der Flugrichtung von Ionen korrespondieren. Jeder der lonenauslässe könnte mit einem eigenen Gaseinlass ausgestattet sein. Es wäre allerdings auch denkbar, einen gemeinsamen Gaseinlass zu realisieren, mit dem alle lonenauslässe in Verbindung stehen. Durch die Verwendung mehrerer erster und zweiter Ionenquellen kann die Generierung von Neutronen signifikant gesteigert werden. Es ist vorstellbar, die einzelnen ersten bzw. zweiten Ionenquellen gleichmäßig und insbesondere symmetrisch um eine gemeinsame Achse herum anzuordnen.

In einer ebenso vorteilhaften Ausführungsform sind mehrere erste Ionenquellen an dem ersten Ende und mehrere zweite Ionenquellen an dem zweiten Ende angeordnet und liegen sich paarweise diametral gegenüber, wobei sich die Strahlrichtungen der Ionenquellen in der mindestens einen Bohrung der Hochspannungselektrode schneiden. Es wäre damit möglich, die Hochspannungselektrode mit lediglich einer Bohrung auszustatten, die insbesondere zentral bzw. mittig in der Hochspannungselektrode angeordnet ist. Die einzelnen Ionenquellen sind dann zu der einzelnen Bohrung ausgerichtet. Die einander paarweise gegenüberliegenden Ionenquellen führen zur Emittierung von aufeinander gerichteten Ionenstrahlen, in denen potentiell Kollisionen zwischen Ionen stattfinden können. Allerdings wäre auch denkbar, dass Kollisionen mit Ionen benachbarter Ionenquellen stattfindet.

Es ist vorteilhaft, wenn der Neutronengenerator ferner mindestens eine gepulste Hochspannungsquelle aufweist, die mit der mindestens einen Ionenquelle verbunden ist. Die Stromstärke und Stromdichte könnte dadurch erhöht werden. Die Pulsform kann dahingehend angepasst werden, dass einzelne Ionenpakete gekürzt werden (sogenanntes "Bunchen"), so dass die örtliche Ionendichte weiter erhöht wird. Die Luminosität als Maß für die Reaktionsrate und damit für die Neutronenausbeute ist quadratisch von der Stromstärke abhängig, so dass folglich diese durch eine gepulste Spannungsversorgung steigerbar ist.

Bevorzugt ist die Kapillare als Einkristall ausgeführt. Dies kann insbesondere die einzelne Kapillare eines Ionenauslasses betreffen. Bei einem Durchflug der beispielsweise von Deuterium- oder Tritium-Ionen in Einkristall-Kapillaren können die Ionen auch mit geringem Energieverlust in Kleinwinkelstreuungen an der kristallinen Oberfläche reflektiert und polarisiert werden. Wenn die Einkristalle magnetisiert werden, ist denkbar, dass die Polarisation noch verbessert wird. Dadurch kann etwa der Wirkungsquerschnitt für eine Deuterium-Tritium-Reaktion um den Faktor von ca. 1,5 bis 2 erhöht werden. Ein in der betreffenden Ionenquelle entstehender Ionenstrahl kann eine Strahlrichtung aufweisen, die nahezu parallel zu einer Hauptrichtung der Kristallstruktur einfällt.

Es kann vorteilhaft sein, wenn der Neutronengenerator ferner einen in dem Vakuumbehälter angeordneten, beheizbaren Gasspender aufweist, der dazu ausgebildet ist, Gas zu absorbieren und bei Erwärmung wieder abzugeben und den Gasdruck einzustellen. Ein solcher Gasspender ist als "Replenisher" bekannt und könnte etwa Titan oder Zirkonium aufweisen. Dieser kann beispielsweise eine Widerstandsheizung aufweisen. Ein solcher Gasspender ist etwa dazu in der Lage, bei einer Temperatur von wenigen hundert Grad Celsius unter niedrigem Druck Wasserstoffisotope aufzunehmen und sie später wieder abzugeben. Damit wird eine sehr einfache Möglichkeit bereitgestellt, im Innern des Vakuumbehälters bedarfsweise ein geeignetes Gas freizugeben, um einen Ionenstrahl zu erzeugen und einen bestimmten Vakuumdruck einzustellen.

Besonders bevorzugt weist der Neutronengenerator ferner mindestens einen Moderator oder eine Bremsvorrichtung zum Thermalisieren und Abschirmen von Neutronen sowie zur Erzeugung von Tritium auf. Die in dem Neutronengenerator entstehenden schnellen Neutronen könnten zwar direkt für weitere Reaktionen und andere Anwendungen genutzt werden. Allerdings ist bei Verwendung eines Moderators oder einer Bremsvorrichtung denkbar, dass die Neutronen thermalisiert werden und dann beispielsweise zur Produktion von Tritium mit der Li(n,alpha)T-Reaktion genutzt werden. Der Moderator bzw. die Bremsvorrichtung könnten außerhalb des Vakuumbehälters angeordnet sein und diesen umgeben. Es wäre allerdings auch eine Anordnung im Inneren des Vakuumbehälters, insbesondere radial außenliegend, denkbar. Als Moderator könnten sich feste und flüssige Stoffe anbieten, etwa Wasser bzw. schweres Wasser, Paraffin, Graphit oder geeignete Kunststoffe oder leichte Metalle wie Lithium und Beryllium. Letzteres kann auch als Neutronenreflektor oder zur Neutronenvermehrung mit ⁹Be(n,2n) 2 alpha-Reaktionen dienen. Ein magnetischer oder elektrischer Betrieb ist denkbar, z.B. zum Ausspülen des erzeugten Tritiums aus der Lithium-Verbindung in der Bremsvorrichtung ("Blanket"). Ein magnetischer oder elektrischer Betrieb ist denkbar. Es könnte sinnvoll sein, Helium und Tritium umzupumpen und/oder getrennt auszuspülen. Dies könnte durch Methoden der Verfahrenstechnik z.B. der Gasextraktion, Rektifikation, Elektrolyse und Isotopentrennung o. ä. geschehen. Hierbei sind elektrische und eventuell auch magnetische Felder nützlich. Zum Umpumpen könnten mechanische Pumpen wegen der Erschütterungen und Abnutzungen möglicherweise nicht bevorzugt sein, so dass eventuell magnetohydrodynamische Pumpen eingesetzt werden könnten.

Weiterhin kann der Neutronengenerator ferner mindestens eine Kühlvorrichtung aufweisen, die zum Kühlen des Gehäuses innerhalb der Bremsvorrichtung mit diesem thermisch in Verbindung steht und zum Wärmetransport dient. Die Kühlvorrichtung könnte dazu ausgebildet sein, Isolieröl ("Transformatorenöl") usw. oder Helium als Wärmesenke aufzunehmen.

Anfallende Wärme, die durch das Kühlen oder das Thermalisieren der Neutronen anfällt, könnte für andere Zwecke verwendet werden, falls erforderlich oder gewünscht. Tatsächlich könnte der erfindungsgemäße Neutronengenerator auch für die Energieerzeugung eingesetzt werden. Hierfür wird im Folgenden auf die Energieerzeugung mit Hilfe von Fusionsreaktionen zunächst die (D,T)-Reaktion betrachtet. Hierbei ist ein großer Vorteil, dass die Bauweise des erfindungsgemäßen Neutronengenerators kompakt ist. Eine Beladung mit Tritium erfordert nur sehr geringe Mengen von Gas, welches überdies auch regeneriert werden kann. Bei einer eventuellen Havarie entweicht nur wenig radioaktives Tritium, das auch in einem Schutzmantelgefäß um den Neutronengenerator aufgefangen werden kann. Zur Herstellung des Tritiums wird die Li(n,alpha)T -Reaktion herangezogen, die allerdings nicht mit den schnellen Neutronen von 14,1 MeV Energie sondern mit thermischen Neutronen in einem Lithium-Blanket erfolgt. Hierzu müssen die schnellen Neutronen zunächst in einem Moderator thermalisiert werden und dann in das Lithium wandern. Wie vorangehend bereits erwähnt, kann als Moderator leichtes oder auch schweres Wasser oder wasserstoffhaltige Verbindungen wie Paraffin etc. verwendet werden. Hierzu reichen relativ kleine Volumina von ca. 15 - 20 cm Durchmesser aus, die den Reaktionsbehälter umgeben. Bei der einfachsten Energieerzeugung zu Heizzwecken reichen vergleichsweise niedrige Temperaturen im Bereich von 80 - 90 °C aus, die bei der Abbremsung der Neutronen im Moderator entstehen, um Räume zu beheizen. Wird Wasser als Moderator eingesetzt und einfache zweikreisige Sicherheitswärmetauscher als Heizkörper, lassen sich Zentralheizungen mit geringen Herstellungs- und Heizkosten und ohne CO2-Ausstoß realisieren. Das Lithium kann dabei in einer wässrigen oder ähnlichen Lösung vorliegen aus der das durch die Li(n,alpha)T-Reaktion erzeugte Tritium aufsteigen kann und als Gas abgepumpt und wieder dem Kreislauf zugeführt werden kann. Aufheizungen durch die Ionenquelle und Ionenstrahlen sind bei Heizzwecken nicht störend, da sie nur die Temperatur des umlaufenden Wassers erhöhen und mit zur Heizleistung beitragen. Bei Anwendungen in der Raumfahrt, beispielsweise zur Beheizung von Satelliten oder zur Elektrizitätserzeugung ist es von Vorteil, dass keine beweglichen Teile in dem Neutronengenerator vorhanden sind. Elektrizität könnte mit thermoelektrischen Konvertern auch ohne bewegte Teile, allerdings mit geringem Wirkungsgrad, oder etwa durch Stirling-Heißgas-Motoren erzeugt werden. Auch hierbei ist es günstig, dass der Neutronengenerator kompakt ist und ein geringes Gewicht aufweist. Für größere Elektrizitätswerke kommen indes auch konventionelle Dampf- oder Gasturbinen infrage. Hierfür könnten dann mehrere kompakte Fusionsgeneratoren, etwa durch Bündelung von vielen Kapillaritrons und deren Zusammenschaltung zu größeren Einheiten, eingesetzt werden. Wegen der kleinen Abmessungen und der einfachen Arbeitsweise sind auch die zu erwartenden radioaktiven Reststoffe leichter zu verarbeiten oder zu entsorgen. Teure Werkstoffe mit kleinen Neutronenwirkungsquerschnitten und Kühlmittel sind wesentlich leichter an Stellen mit hohem Neutronenfluss zu platzieren als bei Tokamaks, Stellaratoren oder anderweitigen Fusionsgeneratoren um Aktivierungen zu vermeiden.

Die Erfindung betrifft demgemäß auch ein Energieerzeugungssystem, aufweisend mindestens einen vorangehend dargestellten Neutronengenerator und eine Energiebereitstellungseinheit die thermisch mit dem mindestens einen Neutronengenerator in Verbindung steht und dazu ausgebildet ist, elektrische Leistung und/oder thermische Leistung abzugeben. Die Energiebereitstellungseinheit kann einen Wärmetauscher aufweisen, der zum Bereitstellen von erwärmtem Fluid ausgebildet ist, beispielsweise von Wasser. Die Energiebereitstellungseinheit kann indes auch eine Vorrichtung sein, mit der Wärmeenergie zumindest teilweise in elektrische Energie umgewandelt werden kann. Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: eine schematische Schnittansicht eines ersten Ausführungsbeispiels eines Neutronengenerators,
- Fig. 2: eine schematische Schnittansicht eines zweiten Ausführungsbeispiels eines Neutronengenerators,
- Fig. 3: eine schematische Schnittansicht eines dritten Ausführungsbeispiels eines Neutronengenerators, und
- Fig. 4: eine schematische Schnittansicht eines vierten Ausführungsbeispiels eines Neutronengenerators.

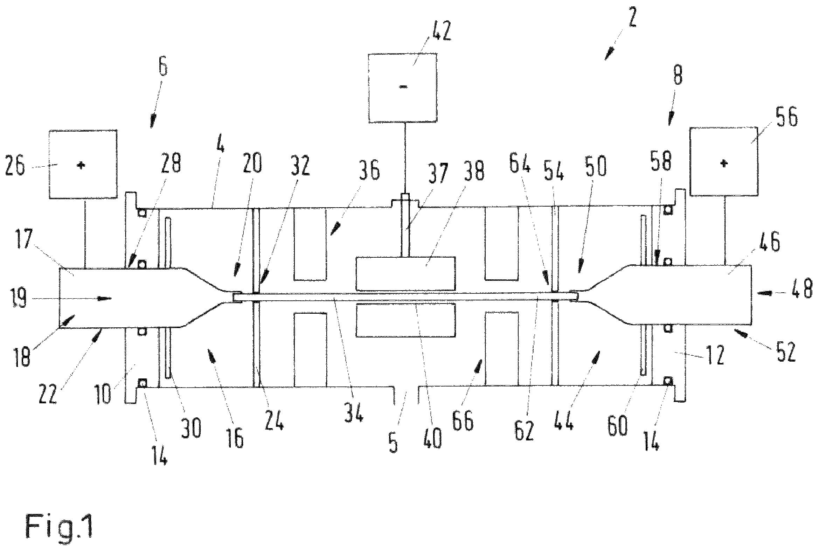

Fig. 1 zeigt ein erstes Ausführungsbeispiel eines Neutronengenerators 2. Die Darstellung ist sehr schematisch und soll lediglich zum besseren Verständnis der Erfindung dienen. Es können Elemente aus Übersichtlichkeitsgründen weggelassen sein, z.B. weisen die erfindungsgemäßigen Neutronengeneratoren (2, 68, 70, 80) ferner mindestens eine Führungskapillare aus einem isolierenden Material vorgesehen auf, die sich von mindestens einem lonenauslass (20, 50) zu der zentralen Hochspannungselektrode erstreckt. Die zeichnerische Darstellung ist nicht als Beschränkung der Erfindung anzusehen: der Schutzbereich der Erfindung wird durch die Ansprüche bestimmt.

Der Neutronengenerator 2 weist einen Vakuumbehälter 4 mit einem ersten Ende 6 und einem zweiten Ende 8 auf. Der Vakuumbehälter 4 könnte insbesondere aus einem nichtleitenden Material, beispielsweise einem Kunststoff, hergestellt sein. Der Vakuumbehälter 4 weist eine Abpumpöffnung 5 auf, an die eine Vakuumpumpe anschließbar ist, um das Innere des Vakuumbehälters 4 auszupumpen. An dem ersten Ende 6 ist ein erster Deckel 10 angeordnet, der den Vakuumbehälter 4 an dem ersten Ende 6 luftdicht verschließt. An dem zweiten Ende 8 ist analog dazu ein zweiter Deckel 12 angeordnet, der den Vakuumbehälter 4 an dem zweiten Ende 8 verschließt. Hierzu sind exemplarisch Dichtringe 14 vorgesehen, die in radialen Nuten der Deckel 10 bzw. 12 angeordnet sind und von innen gegen eine Innenwandung des Vakuumbehälters 4 drücken.

An dem ersten Ende 6 ist eine erste Ionenquelle 16 mit einem ersten Gaszuführungsrohr 17 angeordnet, das durch den ersten Deckel 10 in einen Innenraum des Vakuumbehälters 4 ragt. An einem außenliegenden Ende ist ein erster Gaseinlass 19 angeordnet. Auf einer dem ersten Gaseinlass 19 entgegengesetzten Seite ist ein erster lonenauslass 20 angeordnet, der mit dem ersten Gaseinlass 19 in Fluidverbindung steht. Das erste Gaszuführungsrohr 17 befindet sich hier beispielhaft in einer Bohrung 28 des ersten Deckels 10 und könnte beispielsweise aus Wolfram, Titan oder einem anderen metallischen Material hergestellt sein. Es ist bevorzugt isoliert in dem ersten Deckel 10 angeordnet und ist durch hier nicht gezeigte Mittel justierbar, etwa mit Goniometern, um einen durch die erste Ionenquelle 16 abgegebenen Ionenstrahl sehr fein zu positionieren. Der erste lonenauslass 20 ist in Form einer Kapillare ausgebildet, so dass die erste Ionenquelle 16 ein Kapillaritron bildet. Die Kapillare des ersten Ionenauslasses 20 könnte einen Durchmesser von 10-50 µm aufweisen.

Eine Außenwandung 22 des ersten Gaszuführungsrohrs 17 könnte als erste Anode 18 fungieren, welche mit einer stromabwärts des Ionenauslasses 20 angeordneten ersten Extraktionskathode 24 ein erstes Elektrodenpaar bildet. Die erste Extraktionskathode 24 könnte mit dem Erdpotential verbunden sein. Die Außenwandung 22 ist mit dem Pluspol einer ersten Hochspannungsquelle 26 verbunden, welche eine Spannung von einigen kV liefern könnte. Neben der Ausführung der ersten Ionenquelle 16 mit einem metallischen Gaszuführungsrohr 17 könnten auch Keramik- oder Quarzrohre Verwendung finden, welche mit einer leitfähigen Beschichtung oder elektrischen Leitern, die sich bis zu dem ersten lonenauslass 20 erstrecken, versehen sind und folglich als erste Anode 18 fungieren können.

Ein Gas, beispielsweise Deuterium oder Tritium, wird durch den ersten Gaseinlass 19 dem ersten lonenauslass 20 zugeführt. Durch die Hochspannung von der ersten Hochspannungsquelle 26 wird in dem ersten Gaszuführungsrohr 17 eine Plasmaentladung mit Feldionisierung gezündet. Durch die erste Extraktionskathode 24 treten Ionen aus dem lonenauslass 20 aus, die einen großen Anteil positiver atomarer Ionen enthalten. Die erste Extraktionskathode 24 weist eine Bohrung 32 auf, durch die sich ein resultierender erster Ionenstrahl 34 erstreckt. Die Ionen haben dann eine Energie erreicht, die sich aus dem Produkt der Spannung an der Anode und der Elementarladung berechnet. Eine im Innern des Vakuumbehälters 4 angeordnete erste Isolationsscheibe 30 aus einem nicht leitenden Material schützt weiterhin die erste Extraktionskathode 24 bzw. den ersten Deckel 10.

Mittig in dem Vakuumbehälter 4 befindet sich eine durch einen Stab 37 gehaltene etwa rohrförmig gestaltete, zentrale Hochspannungselektrode 38 mit einer durchgehenden Bohrung 40. Die Kanten der Elektrode 38 und der Bohrung 40 sind abgerundet. Die zentrale Hochspannungselektrode 38 ist mit einem negativen Pol einer zentralen Hochspannungsquelle 42 verbunden. Die positiv geladenen Ionen werden durch eine hohe Spannung im Bereich von 30-100 kV stark beschleunigt, so dass sie als erster Ionenstrahl 34 mit sehr hoher Geschwindigkeit in die Bohrung 40 hinein fliegen. Zum Bündeln bzw. Fokussieren des ersten Ionenstrahls 34 ist stromabwärts der ersten Extraktionskathode 24 beispielhaft ein erstes Multipolelement 36 vorgesehen, das durch elektrostatische oder magnetische Wirkung den ersten Ionenstrahl 34 beeinflusst. Das erste Multipolelement 36 kann je nach Bauart elektrisch oder magnetisch betrieben werden oder in Form von Permanentmagneten ausgeführt sein. Das erste Multipolelement 36 ist hier als Quadrupol-Element ausgeführt, welches in dem Vakuumbehälter 4 symmetrisch um den ersten Ionenstrahl 34 herum angeordnet ist.

An dem zweiten Ende 8 des Neutronengenerators 2 ist eine zweite Ionenquelle 44 angeordnet, die ein zweites Gaszuführungsrohr 46 mit einem zweiten Gaseinlass 48 und einem zweiten lonenauslass 50 aufweist. Eine zweite Anode 52 bildet mit einer zweiten Extraktionskathode 54 ein zweites Elektrodenpaar. Die zweite Anode 52 ist mit einem positiven Pol einer zweiten Hochspannungsquelle 56 verbunden. Denkbar ist jedoch, die erste Ionenquelle 16 und die zweite Ionenquelle 44 mit einer gemeinsamen Hochspannungsquelle zu verbinden.

Auch hier erstreckt sich das zweite Gaszuführungsrohr 46 durch eine Bohrung 58 des zweiten Deckels 12, der durch eine zweite Isolationsscheibe 60 geschützt wird. Basierend auf demselben Prinzip wird ein zweiter Ionenstrahl 62 gebildet, der sich durch eine Bohrung 64 der Extraktionskatode 54 erstreckt. Durch ein zweites Multipolelement 66 wird der zweite Ionenstrahl 62 fokussiert. Durch die hohe negative Spannung an der zentralen Hochspannungselektrode 38 wird auch der zweite Ionenstrahl 62 sehr stark zu der Bohrung 40 der zentralen Hochspannungselektrode 38 beschleunigt. Dort können folglich Kollisionen zwischen einzelnen Ionen erfolgen, die zum Freisetzen von Neutronen führen.

Da jedoch ein Großteil der Ionen der einzelnen Ionenstrahlen 34 und 62 nicht kollidieren, fliegen die Ionen entsprechend durch die Bohrung 40 der zentralen Hochspannungselektrode 38 hindurch und werden bedingt durch die Wechselwirkung mit Restgas in dem Vakuumbehälter 4 sowie die nun rücktreibende Kraft der zentralen Hochspannungselektrode 38 abgebremst und anschließend wieder in Richtung der Bohrung 40 beschleunigt. Dort kann es erneut zu einzelnen Kollisionen führen, die aufgrund von Kernreaktionen zum Abgeben von Neutronen führen. Dieser Vorgang wiederholt sich mehrfach, so dass die positiven Ionen wiederholt mit entgegenkommenden anderen positiven Ionen zusammen prallen können und dabei Kernrektionen auslösen und Neutronen produzieren. Das Fokussieren bzw. Bündeln der Ionenstrahlen 34 und 62 mithilfe der genannten Multipolelemente 36 und 66 zur Optimierung der Luminosität ist besonders vorteilhaft.

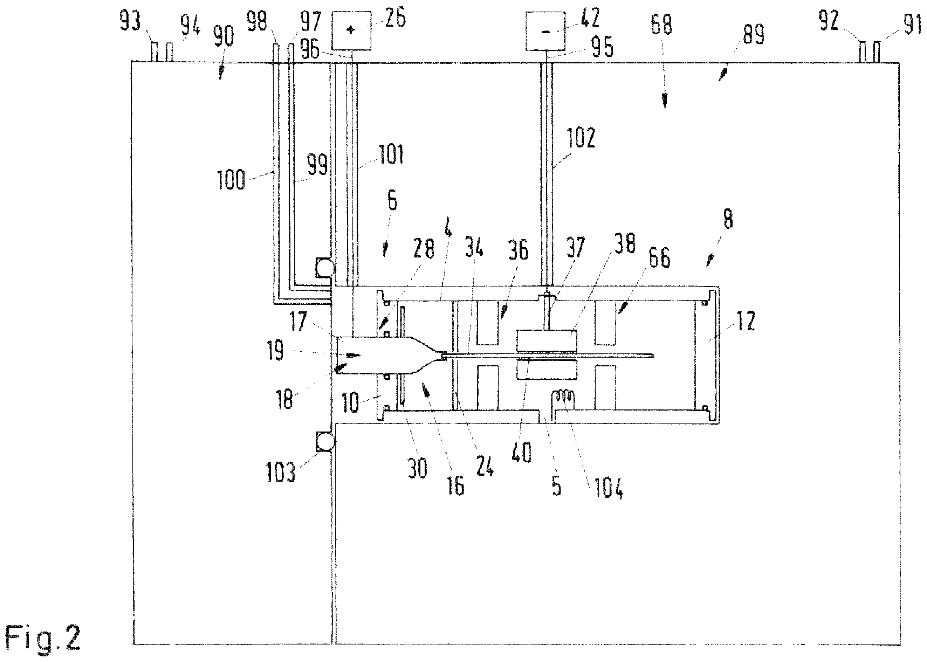

In Fig. 2 wird eine etwas abgewandelte, vereinfachte Variante eines Neutronengenerators 68 gezeigt. Aufgrund der rücktreibenden Beschleunigung der Ionenstrahlen nach dem Durchfliegen der Bohrung 40 der zentralen Hochspannungselektrode 38 kann es zur Abgabe von Neutronen ausreichen, lediglich beispielsweise die erste Ionenquelle 16 einzusetzen. Diese könnte zumindest über ein Zeitintervall Ionen abgeben, die durch die Bohrung 40 der zentralen Hochspannungselektrode 38 hindurchfliegen. Diese werden anschließend durch Wechselwirkung mit dem Restgas und die anziehende Wirkung der zentralen Hochspannungselektrode 38 abgebremst sowie danach durch die beschleunigende Wirkung der zentralen Hochspannungselektrode 38 wieder in die umgekehrte Richtung beschleunigt. Dann können sie mit Ionen aus Richtung der ersten Ionenquelle 16 kollidieren, was schließlich zur Abgabe von Neutronen führt.

Der Aufbau wäre dabei noch etwas einfacher, es wäre jedoch mit einer geringeren Neutronenbildung als mit dem Neutronengenerator 2 der Fig. 1 zu rechnen. Der Vakuumbehälter 4 kann die gleichen oder geringfügig kleinere Abmessungen aufweisen, so dass die Ionen stets zwischen der zentralen Hochspannungselektrode 38 und dem zweiten Ende 8 vollständig abgebremst und zurückbeschleunigt werden können. In der gezeigten Darstellung weist das zweite Ende 8 daher keine zweite Ionenquelle 44, keine zweite Extraktionskathode 54 und weiterhin keine zweite Isolationsscheibe 60 auf. Der zweite Deckel 12 ist ferner durchgängig geschlossen und weist keine Bohrung auf. Es wäre denkbar, hier eine stoffschlüssige Verbindung vorzunehmen oder das zweite Ende 8 integral und vollkommen frei von Fügestellen zu realisieren.

In Fig. 2 wird eine schon genannte zylindrisch geformte Bremsvorrichtung ("Blanket") gezeigt, die exemplarisch einen Grundzylinder 89 und einen Deckel 90 aufweist, die den Moderator und verschiedene Materialien zur Vermehrung, Reflexion und Abschirmung von Neutronen oder zur Herstellung von Tritium enthält. Diese sind z.B. Beryllium zur Reflexion und Neutronenvermehrung mit (n,2n)-Reaktionen, Lithium zur Tritium-Produktion mit den schon erwähnten Li(n,alpha)T-Reaktionen, Blei ebenfalls zur Neutronenvermehrung mit (n,2n)-Reaktionen und zur Abschirmung von Gammastrahlung. Eisen wird als Strukturmaterial und zur Abschirmung von Neutronen benötigt. Hier sind aus der Fusionsforschung schon Materialmischungen bekannt, die z.B. auch das Ausspülen von Tritium und dem dabei unerwünschten Helium aus den Alpha-Teilchen produzierenden Reaktionen erlauben. Dieses Ausspülen kann z.B. über Auslassöffnungen 91 und 93 bei der Bremsvorrichtung ("Blanket") 89, 90 geschehen. Gleichzeitig dienen die Auslassöffnungen 91, 93 und zusätzlich eine Ausspülöffnung 92 im Grundzylinder 89 und eine Ausspülöffnung 94 im Deckel 90 zum Anschluss bei der Energieproduktion an Wärmetauscher/Elektrizitätserzeuger. Eine als Kabel ausgeführte Hochspannungszuführung 96 verbindet die erste Hochspannungsquelle 26 durch eine Bohrung 101 in der Bremsvorrichtung ("Blanket") mit der Kapillaritron-lonenquelle 16, während mit einem weiteren Kabel 95 durch eine zusätzliche Bohrung 102 die zweite Hochspannungsquelle 42 an die zentrale Hochspannungselektrode 38 angeschlossen ist. Im Deckel 90 sind noch zwei Kühlleitungen 99, 100 mit Anschlüssen 97, 98 für Gas, Dampf oder Flüssigkeiten usw. vorgesehen, die mit einem inneren Volumen der Bremsvorrichtung ("Blanket") zur Kühlung z.B. durch Isolieröl ("Transformatorenöl") bzw. Wärmetransport verbunden sind. Der Grundzylinder 89 ist mit einem Dichtring 103 gegen den Deckel 90 abgedichtet, so dass sein inneres Volumen mit Flüssigkeiten oder Gas befüllt werden kann. Im Neutronengenerator 68 befindet sich noch der schon bekannte beheizbare Gasspender ("Replenisher") 104 mit dem Gas gespeichert und der Gasdruck eingestellt werden kann. Es versteht sich, dass alle weiteren notwendigen Anschlüsse für Elektrizität, Gase oder Flüssigkeiten usw. durch entsprechende Kanalbohrungen nach oben aus der Bremsvorrichtung ("Blanket") geführt werden um dort mit den zugehörigen Messeinrichtungen oder Versorgungsgeräten verbunden zu werden. Hierbei muss allerdings darauf geachtet werden, dass die notwendige Abschirmung gegen Neutronen und andere radioaktive Strahlung gewährleistet ist. Für die in den Figuren 1, 3 und 4 gezeigten Anordnungen ist die in Fig. 2 gezeigte Bremsvorrichtung ("Blanket") ebenso anwendbar und vorgesehen, sie ist hier aus Platzgründen nicht eingezeichnet. Beim Gebrauch in Bohrlöchern z.B. in der Erdöl/Erdgasindustrie usw. und dem direkten Einsatz schneller Neutronen ist die Bremsvorrichtung nicht unbedingt nötig, dafür ist ein Schutzrohr oder anderweitige Abschirmung um den Neutronengenerator vorgesehen.

Es ist hervorzuheben, dass die in den Figuren 1, 3 und 4 beschriebenen Anordnungen nicht nur beschränkt sind auf Reaktionen bei denen Neutronen und damit auch radioaktive Elemente entstehen, sondern auch mit Reaktionen einzusetzen sind, bei denen nur geladene Teilchen entstehen, die direkt (fast) keine radioaktiven Endprodukte bewirken. Z.B. die Reaktion ³He(d,p)⁴He bei der nur Protonen und Helium4 im Ausgangskanal vorhanden sind, bei der eine hohe Energie von 18,3 MeV frei wird. Diese Energie kann sofort im Inneren des Vakuumbehälters 4 in Wärme umgesetzt und über Kühlleitungen 99, 100 weiter geführt werden. Gleichwohl ist auch hier eine Bremsvorrichtung vorgesehen, z.B. für die Abschirmung von eventueller Bremsstrahlung von Sekundärelektronen oder anderer elektromagnetischer Strahlung.

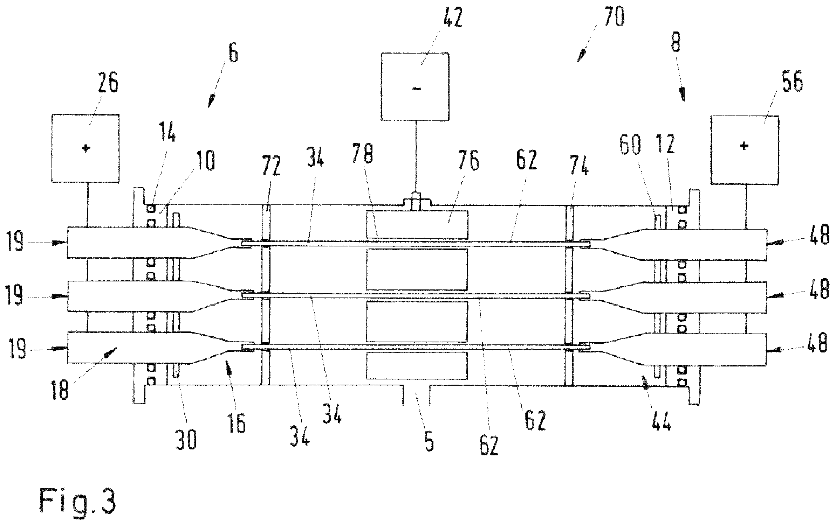

Eine weitere Modifikation zeigt Fig. 3, die zu einem deutlich erweiterten Neutronengenerator 70 führt. Hier sind an dem ersten Ende 6 und an dem zweiten Ende 8 jeweils mehrere erste und zweite Ionenquellen 16 bzw. 44 angeordnet. Diese sind exemplarisch derart parallel zueinander positioniert, dass sich jeweils eine erste Ionenquelle 16 und eine zweite Ionenquelle 44 paarweise gegenüber stehen. Eine erste Extraktionskathode 72 ist beispielhaft in Form einer einzelnen Extraktionskathode mit mehreren Bohrungen 32 zum Durchführen von Ionenstrahlen ausgeführt. Es sind jedoch auch andere Konstellationen und geometrische Formen möglich. Gleiches gilt für eine zweite Extraktionskathode 74.

Besonders hervorzuheben ist, dass eine zentrale Hochspannungselektrode 76 mit jeweils einer Bohrung 78 für jedes Paar von ersten und zweiten Ionenquellen 16 und 44 vorgesehen ist. Die einzelnen Bohrungen 78 sind parallel zueinander angeordnet und in jeder der Bohrungen 78 können Kollisionen von gegenläufig fliegenden Ionen stattfinden. Das Wirkprinzip des Neutronengenerators 70 entspricht dem des Neutronengenerators 2 aus Fig. 1, jedoch in mehrfachen parallelen Ausführungen.

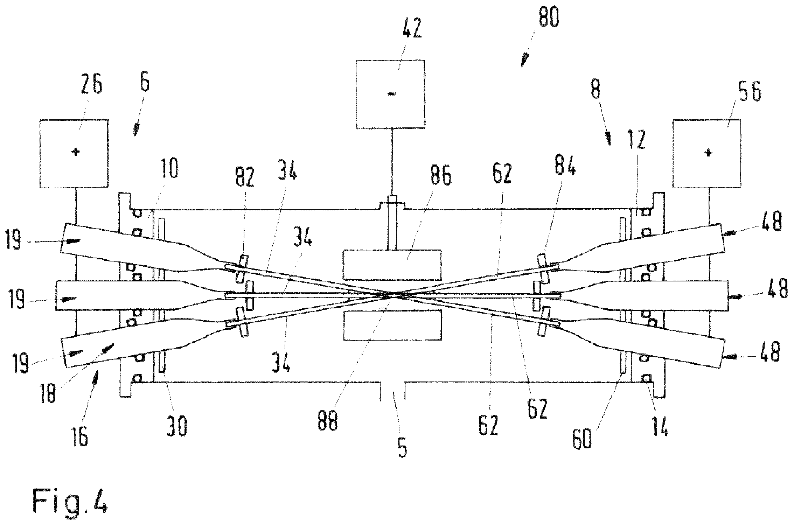

Schließlich zeigt Fig. 4 einen Neutronengenerator 80 mit mehreren ersten Ionenquellen 16 und mehreren zweiten Ionenquellen 44, die sich paarweise diametral einander gegenüberstehen. In der Darstellung sind beispielhaft Raumwinkel zu einer Haupterstreckungsachse des Vakuumbehälters 4 von ungefähr 10° um zumindest eine betreffende Raumachse gewählt. Allerdings sind auch andere Winkel denkbar, die größer oder kleiner sein können.

Weiterhin sind hier lediglich der Vollständigkeit halber erste Extraktionskathoden 82 angedeutet, welche jedoch eine gänzlich andere Form und Anordnung aufweisen können. Gleiches gilt für zweite Extraktionskathoden 84. Es könnte vorstellbar sein, eine größere, konkav geformte Extraktionskathode 82 einzusetzen, die für jedes Paar von Ionenquellen jeweils eine Bohrung aufweist und die hier gezeigten einzelnen Extraktionskathoden 82 bzw. 84 ersetzt.

Hervorzuheben ist, dass eine zentrale Hochspannungselektrode 86 vorgesehen ist, welche eine einzige, etwas vergrößerte Bohrung 88 aufweist. Die Ionenstrahlen verlaufen alle durch dieselbe Bohrung 88 und bevorzugt schneiden sie sich in einem gemeinsamen Punkt, der etwa der Mittelpunkt der Bohrung 88 sein könnte. Hier können Kollisionen zwischen Ionen aus mehreren Ionenstrahlen hervorgerufen werden, was die Effektivität des Neutronengenerators 80 weiter steigert.

Die Erfindung ist nicht auf eine der vorbeschriebenen Ausführungsformen beschränkt, sondern in vielfältiger Weise innerhalb ihres Schutzbereiches, der durch die Ansprüche bestimmt wird, abwandelbar. Man erkennt allerdings, dass der Neutronengenerator gemäß der Erfindung
▪ einen Vakuumbehälter,
▪ mindestens eine Ionenquelle mit einem Gaseinlass, einem Ionenauslass, einer Anode und einer Extraktionskathode, sowie
▪ eine zentrale Hochspannungselektrode
aufweist. Der Ionenauslass ist als Kapillare ausgeführt. Die Extraktionskathode ist zum Extrahieren von Ionen aus dem Ionenauslass stromabwärts des Ionenauslasses angeordnet. Die zentrale Hochspannungselektrode liegt zwischen einem ersten Ende und einem zweiten Ende des Vakuumbehälters und hat mindestens eine Bohrung. Wichtig ist, dass die zentrale Hochspannungselektrode derart zwischen dem ersten Ende und dem zweiten Ende angeordnet ist, dass aus der Ionenquelle an dem ersten oder zweiten Ende abgegebene Ionen durch die mindestens eine Bohrung der zentralen Hochspannungselektrode hindurchfliegen und vor Erreichen des gegenüberliegenden Endes durch Wirkung der zentralen Hochspannungselektrode ihre Flugrichtung umkehren und mit Ionen aus der betreffenden Ionenquelle kollidieren.

Der Neutronengenerator weist ferner mindestens eine Führungskapillare aus einem isolierenden Material auf, die sich von mindestens einem Ionenauslass zu der zentralen Hochspannungselektrode erstreckt.

Eine spezielle Ausführungsform der Erfindung sieht vor, dass der Neutronengenerator zur Erzeugung von Neutronen einen Vakuumbehälter mit zwei Ionenquellen aufweist. Die Ionenquellen erzeugen aus zugeführten Gasen und einer angelegten Hochspannung fein fokussierte Ionenstrahlen, die innerhalb des Neutronengenerators gegeneinander gerichtet sind und entsprechend miteinander kollidieren, wobei die Ionen innerhalb des Neutronengenerators aus zwei Kapillaren heraus mit hoher Stromstärke und hoher Stromdichte heraus beschleunigt werden. Beim Aufeinanderprallen der Ionen entstehen durch Kernreaktionen Neutronen.

Die Erfindung hat mithin das Ziel einen Neutronengenerator zu schaffen, der verschiedene Vorteile gegenüber den bisher bekannten besitzt. Diese Vorteile sind: kompakter Aufbau, niedrige Versorgungsspannung, hohe Neutronenausbeute, einfache Handhabung, guter Wirkungsgrad durch bessere Ausnutzung der Targets.

Das wesentliche Funktionsprinzip ist die Mehrfachnutzung zweier Ionenstrahlen zur wiederholten Nutzung des Targets.

Die gegeneinander laufenden Ionenstrahlen werden durch zwei Ionenquellen vom oben genannten Typ des Kapillaritrons erzeugt und zwischen zwei Elektroden mit Hilfe jeweils einer Gleichspannung im Bereich von ca. 50 bis 100 kV oder einer Wechselspannung im Radiowellenbereich (ca. 8 MHz) beschleunigt. Die beiden Kapillaritrons haben den Vorteil eines leicht herzustellenden einfachen, kompakten und preiswerten Aufbaus mit einem sehr eng begrenzten Ionenstrahl mit hohen Stromdichten von ca. 100 A/cm² bis maximal 1000 A/cm² und einem im Verhältnis zur Größe hohen Ionenstrom von ca. 1 mA bis maximal 1,7 mA.

Die Ionenstrahlen werden in Kapillaren mit Durchmessern von ca. 25 µm durch Anlegen von Spannungen von einigen kV aus einem oder zwei verschiedenen zugeführten Gasen erzeugt. Die Winkelöffnung der Ionenstrahlen beträgt ca. 6 mA/steradian.

Die Ionenstrahlen aus den beiden Kapillaritrons sind gegeneinander gerichtet, so dass die Ionen aus beiden Strahlen kollidieren. Sie werden durch elektrostatische Linsen und magnetische bzw. elektrische Quadrupole fokussiert, damit die beiden Ionenstrahlen ebenfalls sehr kleine Durchmesser haben und mit hoher Wahrscheinlichkeit miteinander in Wechselwirkung treten.

Ist die Energie hoch genug, z.B. ca. 100 bis 200 keV im Schwerpunktssystem, können die Ionen beim Zusammenstoß Kernreaktionen mit Neutronenproduktion auslösen. Die entstehenden schnellen Neutronen werden entweder direkt für weitere Reaktionen und andere Anwendungen genutzt oder in einem den Reaktionsbehälter umgebenden Moderator thermalisiert und dann z.B. zur Produktion von Tritium mit der Li(n,alpha)T-Reaktion ausgenutzt. Die entstehende Wärme kann dann anderweitig genutzt werden.

### Bezugszeichenliste

- 2: Neutronengenerator
- 4: Vakuumbehälter
- 5: Abpumpöffnung
- 6: erstes Ende
- 8: zweites Ende
- 10: erster Deckel
- 12: zweiter Deckel
- 14: Dichtring
- 16: erste Ionenquelle
- 17: erstes Gaszuführungsrohr
- 18: erste Anode
- 19: erster Gaseinlass
- 20: erster lonenauslass
- 22: Außenwandung
- 24: erste Extraktionskathode
- 26: erste Hochspannungsquelle
- 28: Bohrung
- 30: erste Isolationsscheibe
- 32: Bohrung
- 34: erster Ionenstrahl
- 36: erstes Multipolelement
- 37: Stab
- 38: zentrale Hochspannungselektrode
- 40: Bohrung
- 42: zentrale Hochspannungsquelle
- 44: zweite Ionenquelle
- 46: zweites Gaszuführungsrohr
- 48: zweiter Gaseinlass
- 50: zweiter Ionenauslass
- 52: zweite Anode
- 54: zweite Extraktionskathode
- 56: zweite Hochspannungsquelle
- 58: Bohrung
- 60: zweite Isolationsscheibe
- 62: zweiter Ionenstrahl
- 64: Bohrung
- 66: zweites Multipolelement
- 68: Neutronengenerator
- 70: Neutronengenerator
- 72: erste Extraktionskathode
- 74: zweite Extraktionskathode
- 76: zentrale Hochspannungselektrode
- 78: Bohrung
- 80: Neutronengenerator
- 82: erste Extraktionskathode
- 84: zweite Extraktionskathode
- 86: zentrale Hochspannungselektrode
- 88: Bohrung
- 89: Grundzylinder von zylinderförmiger Bremsvorrichtung ("Blanket")
- 90: Deckel von zylinderförmiger Bremsvorrichtung ("Blanket")
- 91: erste Ausspülöffnung im Grundzylinder
- 92: zweite Ausspülöffnung im Grundzylinder
- 93: erste Ausspülöffnung im Deckel
- 94: zweite Ausspülöffnung im Deckel
- 95: Kabel/Hochspannungszuführung zur zentralen Hochspannungsquelle
- 96: Kabel/Hochspannungszuführung zur ersten Hochspannungsquelle
- 97: erster Kühlungsanschluss
- 98: zweiter Kühlungsanschluss
- 99: erste Kühlleitung
- 100: zweite Kühlleitung
- 101: erste Durchlassbohrung
- 102: zentrale Durchgangsbohrung
- 103: Dichtring
- 104: Gasspender ("Replenisher")

## Patentansprüche

1. Neutronengenerator (2, 68, 70, 80), aufweisend:
▪ einen Vakuumbehälter (4) mit einem ersten Ende (6) und einem zweiten Ende (8),
▪ mindestens eine Ionenquelle (16, 44) an dem ersten Ende (6) und/oder dem zweiten Ende (8) mit einem Gaseinlass (19, 48), einem lonenauslass (20, 50), einer Anode (18, 52) und einer Extraktionskathode (24, 54), und
▪ eine zentrale Hochspannungselektrode (38, 76, 86),
▪ wobei der lonenauslass (20, 50) als Kapillare ausgeführt ist,
▪ wobei die Extraktionskathode (24, 54) zum Extrahieren von Ionen aus dem lonenauslass (20, 50) stromabwärts des Ionenauslasses (20, 50) angeordnet ist,
▪ wobei die zentrale Hochspannungselektrode (38, 76, 86) zwischen dem ersten Ende (6) und dem zweiten Ende (8) des Vakuumbehälters (4) angeordnet ist und mindestens eine Bohrung (40, 78, 88) aufweist,
▪ wobei die zentrale Hochspannungselektrode (38, 76, 86) derart zwischen dem ersten Ende (6) und dem zweiten Ende (8) angeordnet ist, dass aus einer betreffenden Ionenquelle (16, 44) an dem ersten Ende (6) oder dem zweiten Ende (8) abgegebene Ionen durch die mindestens eine Bohrung (40, 78, 88) der zentralen Hochspannungselektrode (38, 76, 86) hindurchfliegen und vor Erreichen des gegenüberliegenden Endes (6, 8) durch Wirkung der zentralen Hochspannungselektrode (38, 76, 86) ihre Flugrichtung umkehren und mit Ionen aus der betreffenden Ionenquelle (16, 44) kollidieren, und
**dadurch gekennzeichnet**,
▪ dass der Neutrongenerator ferner mindestens eine Führungskapillare aus einem isolierenden Material aufweist, die sich von mindestens einem lonenauslass (20, 50) zu der zentralen Hochspannungselektrode (38, 76, 86) erstreckt.

2. Neutronengenerator (2, 68, 70, 80) nach Anspruch 1,
wobei mindestens eine erste Ionenquelle (16) an dem ersten Ende (6) und mindestens eine zweite Ionenquelle (44) an dem zweiten Ende (8) angeordnet sind, wobei die erste Ionenquelle (16) und die zweite Ionenquelle (44) derart in dem Vakuumbehälter (4) angeordnet sind, dass ein erster lonenauslass (20) und ein zweiter lonenauslass (50) zueinander gerichtet sind, und
wobei die Bohrung (40, 78, 88) der zentralen Hochspannungselektrode (38, 76, 86) in einer Verbindungslinie zwischen dem ersten lonenauslass (20) und dem zweiten lonenauslass (50) liegt.

3. Neutronengenerator (2, 68, 70, 80) nach Anspruch 2,
ferner aufweisend für jede Ionenquelle (16, 44) mindestens ein elektrisch oder magnetisch betreibbares Multipolelement (36, 66) stromabwärts der betreffenden Ionenquelle (16, 44) und stromaufwärts der zentralen Hochspannungselektrode (38, 76, 86) zum Fokussieren eines betreffenden Ionenstrahls (34, 62).

4. Neutronengenerator (2, 68, 70, 80) nach einem der vorhergehenden Ansprüche, wobei die zentrale Hochspannungselektrode (38, 76, 86) einen zu einer Verbindungslinie zwischen dem ersten Ende (6) und dem zweiten Ende (8) senkrecht verlaufenden Querschnitt aufweist, dessen Größe die eines in derselben Richtung gebildeten Querschnitts des Vakuumbehälters (4) unterschreitet.

5. Neutronengenerator (2, 68, 70, 80) nach Anspruch 2,
wobei mehrere erste Ionenquellen (16) an dem ersten Ende (6) und mehrere zweite Ionenquellen (44) an dem zweiten Ende (8) angeordnet sind und sich paarweise gegenüberliegen, so dass dadurch mehrere parallel zueinander angeordnete Ionenstrahlen (34, 62) gebildet werden können, und
wobei die Hochspannungselektrode jeweils eine Bohrung für ein Paar erster Ionenquellen (16) und zweiter Ionenquellen (44) aufweist, die mit der Flugrichtung von Ionen korrespondieren.

6. Neutronengenerator (2, 68, 70, 80) nach Anspruch 2,
wobei mehrere erste Ionenquellen (16) an dem ersten Ende (6) und mehrere zweite Ionenquellen (44) an dem zweiten Ende (8) angeordnet sind und sich paarweise diametral gegenüberliegen, und
wobei sich die Strahlrichtungen der Ionenquellen (16, 44) in der Bohrung (40, 78, 88) der zentralen Hochspannungselektrode (38, 76, 86) schneiden.

7. Neutronengenerator (2, 68, 70, 80) nach einem der vorhergehenden Ansprüche, ferner aufweisend mindestens eine gepulste Hochspannungsquelle (26, 42, 56), die mit der mindestens einen Ionenquelle (16, 44) verbunden ist.

8. Neutronengenerator (2, 68, 70, 80) nach einem der vorhergehenden Ansprüche, wobei die Kapillare als Einkristall ausgeführt ist.

9. Neutronengenerator (2, 68, 70, 80) nach einem der vorhergehenden Ansprüche, ferner aufweisend einen in dem Vakuumbehälter (4) angeordneten, beheizbaren Gasspender (104), der dazu ausgebildet ist, Gas zu absorbieren und bei Erwärmung wieder abzugeben und den Gasdruck einzustellen.

10. Neutronengenerator (2, 68, 70, 80) nach einem der vorhergehenden Ansprüche, ferner aufweisend mindestens einen Moderator oder eine Bremsvorrichtung zum Thermalisieren und Abschirmen von Neutronen sowie zur Erzeugung von Tritium.

11. Neutronengenerator (2, 68, 70, 80) nach Anspruch 10 ferner aufweisend mindestens eine Kühlvorrichtung, die zum Kühlen des Gehäuses innerhalb der Bremsvorrichtung (89, 90) mit diesem thermisch in Verbindung steht und zum Wärmetransport dient.

12. Energieerzeugungssystem, aufweisend mindestens einen Neutronengenerator (2, 68, 70, 80) nach einem der Ansprüche 1 bis 11, und eine Energiebereitstellungseinheit die thermisch mit dem mindestens einen Neutronengenerator (2, 68, 70, 80) in Verbindung steht und dazu ausgebildet ist, elektrische Leistung und/oder thermische Leistung abzugeben.

## Claims

1. Neutron generator (2, 68, 70, 80), comprising:
▪ a vacuum container (4) with a first end (6) and a second end (8),
▪ at least one ion source (16, 44) at the first end (6) and/or the second end (8) with a gas inlet (19, 48), an ion outlet (20, 50), an anode (18, 52) and an extraction cathode (24, 54), and
▪ a central high-voltage electrode (38, 76, 86),
▪ wherein the ion outlet (20, 50) is designed as a capillary
▪ wherein the extraction cathode (24, 54) for extracting ions from the ion outlet (20, 50) is arranged downstream of the ion outlet (20, 50)
▪ wherein the central high-voltage electrode (38, 76, 86) is arranged between the first end (6) and the second end (8) of the vacuum container (4) and has at least one bore (40, 78, 88),
▪ wherein the central high-voltage electrode (38, 76, 86) is arranged between the first end (6) and the second end (8) in such a way that ions emitted from a respective ion source (16, 44) at the first end (6) or the second end (8) pass through the at least one bore (40, 78, 88) of the central high-voltage electrode (38, 76, 86) and, before reaching the opposite end (6, 8), reverse their direction of flight by action of the central high-voltage electrode (38, 76, 86) and collide with ions from the relevant ion source (16, 44),
**characterized in that** the neutron generator further comprises at least one guide capillary made of an insulating material extending from at least one ion outlet (20, 50) to the central high-voltage electrode (38, 76, 86).

2. Neutron generator (2, 68, 70, 80) according to claim 1, wherein at least one first ion source (16) is arranged at the first end (6) and at least one second ion source (44) is arranged at the second end (8), wherein the first ion source (16) and the second ion source (44) are arranged in the vacuum vessel (4) in such a way that a first ion outlet (20) and a second ion outlet (50) are directed towards each other, and wherein the bore (40, 78, 88) of the central high-voltage electrode (38, 76, 86) lies in a connecting line between the first ion outlet (20) and the second ion outlet (50).

3. Neutron generator (2, 68, 70, 80) according to claim 2,
further comprising, for each ion source (16, 44), at least one electrically or magnetically operable multipole element (36, 66) downstream of the respective ion source (16, 44) and upstream of the central high-voltage electrode (38, 76, 86) for focusing a respective ion beam (34, 62).

4. Neutron generator (2, 68, 70, 80) according to any one of the preceding claims,
wherein the central high-voltage electrode (38, 76, 86) has a cross-section perpendicular to a connecting line between the first end (6) and the second end (8), the size of which cross-section is less than that of a cross-section of the vacuum container (4) formed in the same direction.

5. Neutron generator (2, 68, 70, 80) according to claim 2,
wherein a plurality of first ion sources (16) are arranged at the first end (6) and a plurality of second ion sources (44) are arranged at the second end (8) and face each other in pairs so that a plurality of ion beams (34, 62) arranged parallel to each other can be formed, and
wherein the high voltage electrode has a bore for each of a pair of first ion sources (16) and second ion sources (44) corresponding to the direction of flight of ions.

6. Neutron generator (2, 68, 70, 80) according to claim 2,
wherein a plurality of first ion sources (16) are arranged at the first end (6) and a plurality of second ion sources (44) are arranged at the second end (8) and are diametrically opposed to each other in pairs, and
wherein the beam directions of the ion sources (16, 44) intersect in the bore (40, 78, 88) of the central high-voltage electrode (38, 76, 86).

7. Neutron generator (2, 68, 70, 80) according to any one of the preceding claims, further comprising at least one pulsed high voltage source (26, 42, 56) connected to the at least one ion source (16, 44).

8. Neutron generator (2, 68, 70, 80) according to any one of the preceding claims, where the capillary is designed as a single crystal.

9. Neutron generator (2, 68, 70, 80) according to any one of the preceding claims, further comprising a heatable gas dispenser (104) arranged in the vacuum container (4), which is designed to absorb gas and release it again when heated and to adjust the gas pressure.

10. Neutron generator (2, 68, 70, 80) according to any one of the preceding claims, further comprising at least one moderator or braking device for thermalizing and shielding neutrons and for generating tritium.

11. Neutron generator (2, 68, 70, 80) according to claim 10, further comprising at least one cooling device which is thermally connected to the housing inside the braking device (89, 90) for cooling the housing and serves for heat transport.

12. Energy generation system, comprising at least one neutron generator (2, 68, 70, 80) according to one of claims 1 to 11, and an energy supply unit which is thermally connected to the at least one neutron generator (2, 68, 70, 80) and is designed to output electrical power and/or thermal power.

## Revendications

1. Générateur de neutrons (2, 68, 70, 80), comprenant :
▪ un récipient sous vide (4) ayant une première extrémité (6) et une deuxième extrémité (8),
▪ au moins une source d'ions (16, 44) à la première extrémité (6) et/ou à la deuxième extrémité (8), comprenant une entrée de gaz (19, 48), une sortie d'ions (20, 50), une anode (18, 52) et une cathode d'extraction (24, 54), et
▪ une électrode centrale à haute tension (38, 76, 86),
▪ la sortie d'ions (20, 50) étant réalisée sous forme de capillaire
▪ dans lequel la cathode d'extraction (24, 54) pour extraire les ions de la sortie d'ions (20, 50) est disposée en aval de la sortie d'ions (20, 50)
▪ dans lequel l'électrode centrale à haute tension (38, 76, 86) est disposée entre la première extrémité (6) et la deuxième extrémité (8) du récipient sous vide (4) et comporte au moins un alésage (40, 78, 88),
▪ l'électrode centrale à haute tension (38, 76, 86) étant disposée entre la première extrémité (6) et la deuxième extrémité (8) de telle sorte que les ions émis par une source d'ions respective (16, 44) à la première extrémité (6) ou à la deuxième extrémité (8) traversent le au moins un trou (40, 78, 88) de l'électrode centrale à haute tension (38, 76, 86) et, avant d'atteindre l'extrémité opposée (6, 8), inversent leur direction de vol sous l'action de l'électrode centrale à haute tension (38, 76, 86) et entrent en collision avec des ions provenant de la source d'ions concernée (16, 44),
**caractérisé en ce que** le générateur de neutrons comprend en outre au moins un capillaire de guidage en matériau isolant s'étendant depuis au moins une sortie d'ions (20, 50) jusqu'à l'électrode centrale à haute tension (38, 76, 86).

2. Générateur de neutrons (2, 68, 70, 80) selon la revendication 1, dans lequel au moins une première source d'ions (16) est disposée à la première extrémité (6) et au moins une deuxième source d'ions (44) est disposée à la deuxième extrémité (8), la première source d'ions (16) et la deuxième source d'ions (44) étant disposées dans le récipient sous vide (4) de telle manière, qu'une première sortie d'ions (20) et une deuxième sortie d'ions (50) sont dirigées l'une vers l'autre, et dans lequel l'alésage (40, 78, 88) de l'électrode centrale à haute tension (38, 76, 86) se trouve dans une ligne de jonction entre la première sortie d'ions (20) et la deuxième sortie d'ions (50).

3. Générateur de neutrons (2, 68, 70, 80) selon la revendication 2,
comprenant en outre, pour chaque source d'ions (16, 44), au moins un élément multipolaire (36, 66) pouvant être actionné électriquement ou magnétiquement, en aval de la source d'ions (16, 44) concernée et en amont de l'électrode centrale à haute tension (38, 76, 86), pour focaliser un faisceau d'ions (34, 62) concerné.

4. Générateur de neutrons (2, 68, 70, 80) selon l'une quelconque des revendications précédentes,
l'électrode centrale à haute tension (38, 76, 86) présentant une section transversale s'étendant perpendiculairement à une ligne de liaison entre la première extrémité (6) et la deuxième extrémité (8), dont la taille est inférieure à celle d'une section transversale du récipient à vide (4) formée dans la même direction.

5. Générateur de neutrons (2, 68, 70, 80) selon la revendication 2,
dans lequel plusieurs premières sources d'ions (16) sont disposées à la première extrémité (6) et plusieurs secondes sources d'ions (44) sont disposées à la seconde extrémité (8) et se font face par paires, de sorte que plusieurs faisceaux d'ions (34, 62) disposés parallèlement les uns aux autres peuvent ainsi être formés, et
dans lequel l'électrode à haute tension comporte un alésage respectif pour une paire de premières sources d'ions (16) et de secondes sources d'ions (44) correspondant à la direction de vol des ions.

6. Générateur de neutrons (2, 68, 70, 80) selon la revendication 2,
dans lequel une pluralité de premières sources d'ions (16) sont disposées à la première extrémité (6) et une pluralité de secondes sources d'ions (44) sont disposées à la seconde extrémité (8) et sont diamétralement opposées par paires, et dans lequel les directions de faisceau des sources d'ions (16, 44) se croisent dans l'alésage (40, 78, 88) de l'électrode centrale à haute tension (38, 76, 86).

7. Générateur de neutrons (2, 68, 70, 80) selon l'une quelconque des revendications précédentes,
comprenant en outre au moins une source de haute tension pulsée (26, 42, 56) connectée à ladite au moins une source d'ions (16, 44).

8. Générateur de neutrons (2, 68, 70, 80) selon l'une quelconque des revendications précédentes,
le capillaire étant réalisé sous forme de monocristal.

9. Générateur de neutrons (2, 68, 70, 80) selon l'une quelconque des revendications précédentes,
présentant en outre un distributeur de gaz (104) pouvant être chauffé, disposé dans le récipient sous vide (4), qui est conçu pour absorber du gaz et le restituer lorsqu'il est chauffé et pour ajuster la pression du gaz.

10. Générateur de neutrons (2, 68, 70, 80) selon l'une quelconque des revendications précédentes,
comprenant en outre au moins un modérateur ou un dispositif de freinage pour la thermalisation et la protection des neutrons ainsi que pour la production de tritium.

11. Générateur de neutrons (2, 68, 70, 80) selon la revendication 10, comprenant en outre au moins un dispositif de refroidissement qui est en communication thermique avec le boîtier à l'intérieur du dispositif de freinage (89, 90) pour refroidir le boîtier et qui sert au transport de chaleur.

12. Système de production d'énergie, comprenant au moins un générateur de neutrons (2, 68, 70, 80) selon l'une des revendications 1 à 11, et une unité de fourniture d'énergie qui est en liaison thermique avec ledit au moins un générateur de neutrons (2, 68, 70, 80) et qui est conçue pour fournir une puissance électrique et/ou une puissance thermique.
